# EUROPÄISCHE PATENTSCHRIFT

(11) **EP 3 101 165 B1**
(45) Veröffentlichungstag und Bekanntmachung des Hinweises auf die Patenterteilung: **24.01.2018**
(21) Anmeldenummer: 16170094.3
(22) Anmeldetag: 18.05.2016
(51) Int. Cl.: D04H 1/4334, D04H 1/435, D04H 1/488, D04H 1/558, D04H 1/64, D04H 11/08, B60R 13/02, B60R 13/08, B60N 3/04

(54) **VERFAHREN ZUR HERSTELLUNG EINES KRAFTFAHRZEUGINNENRAUMVERKLEIDUNGSMATERIALS**
METHOD FOR PRODUCING A MOTOR VEHICLE INTERIOR CLADDING MATERIAL
PROCEDE DE FABRICATION D'UN MATERIAU DE REVETEMENT D'HABITACLE DE VEHICULE AUTOMOBILE

(30) Priorität: 05.06.2015 DE 102015108928
(43) Veröffentlichungstag der Anmeldung: 07.12.2016
(73) Patentinhaber: Johann Borgers GmbH, 46397 Bocholt (DE)
(72) Erfinder: YILMAZ, Faruk, 46499 Hamminkeln (DE)
(74) Vertreter: Viering, Jentschura & Partner mbB Patent- und Rechtsanwälte

(56) Entgegenhaltungen:
- EP-A1- 2 664 702
- US-A- 4 391 866
- US-A- 5 216 790
- US-A- 5 217 799
- US-A1- 2005 008 813

## Beschreibung

Die Erfindung richtet sich auf ein Verfahren zur Herstellung eines Kraftfahrzeuginnenraumverkleidungsmaterials, das ein Nadelvlies umfasst oder zumindest im Wesentlichen aus einem Nadelvlies besteht, welches ein Fasergemisch aus 25 - 35 Gew.-% Polyamid (PA)-Fasern und 65 - 75 Gew.-% Polyester(PES)-Fasern, vorzugsweise ohne weitere Bindefasern, aufweist, sowie mechanisch durch Nadeln und mittels einer adhäsiven Bindung verfestigt ist.

Im Kraftfahrzeugbau ist es seit langem üblich, Innenraumverkleidungsbauteile oder Ausstattungselemente für den Kraftfahrzeuginnenraum aus einem Nadelvliesmaterial herzustellen. Hierbei kommen Nadelvliese, beispielsweise das im Markt unter der Bezeichnung Ibolours® bekannte Nadelvlies, oder Polvliese zum Einsatz, deren Ausgangsfaservlies aus einer Mischung verschiedener Kunststofffasern, wie Polyamid(PA)-Fasern, Polyester(PES)-Fasern oder Polypropylen(PP)-Fasern besteht. Dieses Faservlies wird dann in üblicher Weise mechanisch mittels Nadeln und adhäsiv durch Verklebung verfestigt, gewünschtenfalls auf ein Trägermaterial aufgebracht, und falls gewünscht, einem thermischen Formgebungsschritt oder thermischen Formgebungsverfahren unterworfen, um das Nadelvliesmaterial thermoplastisch zu einem Verkleidungsbauteil oder Ausstattungselement umzuformen. Trotzdem besteht weiterhin das Bedürfnis, ein derartiges Kraftfahrzeuginnenraumverkleidungsmaterial in Bezug auf seine Anwendbarkeit und insbesondere in Bezug auf seine Oberflächenoptik zu verbessern. Insbesondere gilt dies für Nadelvliesmaterialien, die mittels einer abschließenden thermoplastischen Verformung in ihren für die weitere Verwendung vorgesehenen Endzustand gebracht werden.

Ein Faservlies-Verbundbauteil, bei welchem ein Mischfaservlies aus Thermoplastfasern und höher schmelzenden Verstärkungsfasern mit mindestens einer Verbundfolie verbunden wird, ist aus der WO 2004/098879 A1 bekannt. Das Faservlies besteht dabei beispielsweise aus Polyamid(PA)-Thermoplastfasern und Polyester(PE)-Verstärkungsfasern in einem Mischungsverhältnis zwischen 80:20 und 20:80. Die Verfestigung des Faservlieses erfolgt durch Nadeln. Mittels eines thermischen Formgebungsprozesses wird das genadelte Mischfaservlies zu einem Automobilinnenteil verformt.

Ein aus Polyester-Bindefasern und Polyamidmatrixfasern bestehendes Faservlies zur Herstellung von Formteilen für die Innenausstattung von Kraftfahrzeugen ist zudem aus der DE 100 07 556 A1 bekannt. Das in diesem Dokument offenbarte Nadelvlies weist ein Mischungsverhältnis von Polyamidfaser zu Polyesterfaser im Mischungsbereich von 10:90 bis 90:10 sowie ein Nadelvlies mit einer Stichdichte von 20 bis 100 Einstichen/cm² auf. Zudem werden die Polyester-Bindefasern in gekräuseltem Zustand und mit Faserstärken oder einer Feinheit von 1,7 bis 17 dtex verarbeitet.

Ein für die Herstellung eines Bodenformteils für Kraftfahrzeuge verwendetes Nadelvlies ist weiterhin aus der DE 36 25 473 A1 bekannt. Dieses Nadelvlies kann aus einer Mischung aus Polyamid- und Polyester-Fasern bestehen, die eine Feinheit von etwa 15 bis 20 dtex, vorzugsweise von 17 dtex, aufweisen und zu dem eine Einstichdichte von 100 bis 250 Einstichen/cm² aufweisenden Nadelvlies vernadelt sind. Dieses Nadelvlies wird zu einem Bodenformteil verformt.

Aus der DE 101 64 087 A1 ist ein Dekorvliesstoff bekannt, der durch Vernadeln von Fasern zu einem Nadelvlies mit einer Stichdichte von 400 bis 1000 Stichen/cm² ausgebildet ist und das auf seiner Polseite eine Polhöhe oder Faserhöhe von 1 bis 6 mm aufweist.

Ein Innenraumformteil eines Kraftfahrzeuges ist zudem aus der DE 11 2012 005 205 B5 bekannt. Dieses Innenraumformteil umfasst als eine Lage eine Teppichschicht, die aus einem genadelten Faservlies besteht, deren Hohlfasern Polyamidfasern oder Polyesterfasern umfassen können. Dieses Nadelvlies wird dann zusammen mit anderen Schichtbestandteilen zu dem Innenraumformteil verformt.

Der Erfindung liegt die Aufgabe zugrunde, eine Lösung zu schaffen, die ein Nadelvliesmaterial, insbesondere ein Kraftfahrzeuginnenraumverkleidungsmaterial, bereitstellt, das auch nach einer thermoplastischen Verformung im Temperaturbereich zwischen 150°C und 250°C noch eine optisch ansprechende Oberflächenbeschaffenheit aufweist.

Diese Aufgabe wird durch ein Verfahren zur Herstellung eines Kraftfahrzeuginnenraumverkleidungsmaterials gemäß Anspruch 1 gelöst. Vorteilhafte Ausgestaltungen und zweckmäßige Weiterbildungen des Kraftfahrzeuginnenraumverkleidungsmaterials sind Gegenstand der abhängigen Ansprüche.

Kraftfahrzeuginnenraumverkleidungsmaterial meint hierbei, dass ein solches Material für die Verwendung im Innenraumbereich eines Kraftfahrzeuges nicht nur geeignet, sondern auch bestimmt ist.

Das nach dem erfindungsgemäßen Verfahren hergestellte Kraftfahrzeuginnenraumverkleidungsmaterial zeichnet sich erfindungsgemäß also zunächst dadurch aus, dass der Faseranteil des Nadelvlieses aus einem Fasergemisch aus 25 bis 35 Gew.-% Polyamid(PA)-Fasern und 65 bis 75 Gew.-% Polyester(PES)-Fasern besteht. Überraschenderweise wird durch die Verwendung und den Einsatz eines Fasergemisches, das aus 25 Gew.-% Polyamid(PA)-Fasern und 65 bis 75 Gew.-% Polyester(PES)-Fasern besteht, erreicht, dass auch nach einem bei der Herstellung und Verarbeitung eines solchen Kraftfahrzeuginnenraumverkleidungsmaterials oder bei dessen Weiterverarbeitung zu einem Kraftfahrzeuginnenraumverkleidungsbauteil üblicherweise im Temperaturbereich um 200°C zu durchlaufenden thermischen Formgebungsverfahren oder thermischen Formgebungsprozess anschließend eine Oberflächenstruktur und Oberflächenoptik erreicht wird, die äußerst ansprechend und gegenüber bisher bekannten derartigen Oberflächenerscheinungsbildern deutlich verbessert ist. Ursächlich hierfür ist die Zumischung des Polyamid-Faseranteils, vorzugsweise ohne weitere oder zusätzliche Bindefasern. Die Polyamid-Fasern sorgen zum einen dafür, dass sich nach einem thermischen Formgebungsprozess, bei welchem das Material thermoplastisch verformt wird, die Fasern des Nadelvlieses wieder aufstellen. Außerdem verhindern die Polyamid-Fasern, dass die Oberfläche nach einem solchen thermischen Formgebungsprozess oder thermischen Formgebungsschritt glänzend bleibt. Es stellt sich auch nach einer solchen thermischen Formgebungsbehandlung das gewünschte textilartige Aussehen des faserseitigen Oberflächenbereiches des das erfindungsgemäße Nadelvlies aufweisenden Kraftfahrzeuginnenraumverkleidungsmaterials oder Kraftfahrzeuginnenraumverkleidungsbauteils ein. Hierbei hat sich der erfindungsgemäße Anteil von 25-35 Gew.-% an Polyamid-Fasern als optimaler Bereich herausgestellt. Um andererseits eine ausreichende Festigkeit des hergestellten Materials, eine ausreichende adhäsive Bindung und eine insgesamt kostengünstige Herstellung zu erreichen, hat es sich zudem als vorteilhaft erwiesen, die Fasermischung neben den Polyamid-Fasern zu einem Anteil von 65 bis 75 Gew.-% aus Polyester(PES)-Fasern zusammenzusetzen.

Eine besonders vorteilhafte Fasermischung für das Nadelvlies besteht aus 30 Gew.-% Polyamid(PA)-Fasern und 70 Gew.-% Polyester(PES)-Fasern.

Weiterhin ist es gemäß der Erfindung so, dass das Nadelvlies aus einem Faservlies gebildet ist, das den Anteil von 25 bis 35 Gew.-% Polyamid(PA)-Fasern und 65 bis 75 Gew.-% Polyester(PES)-Fasern aufweist und das mechanisch durch Nadeln sowie mittels einer adhäsiven Bindung verfestigt ist. Für die Herstellung des erfindungsgemäßen Kraftfahrzeuginnenraumverkleidungsmaterials eignet sich ein solches Faservlies, aus dem dann das Nadelvlies durch Nadeln und eine klebende Bindung oder Verbindung hergestellt wird, besonders. Hierbei ist es dann erfindungswesentlich, dass zur Bildung des Nadelvlieses und zur Ausbildung des vorteilhaften Oberflächenerscheinungsbildes ein aus dem Fasergemisch gelegter Faserflor nacheinander drei Nadelmaschinen durchläuft, die jeweils eine Nadelbewegung in vertikaler Richtung aufweisen oder vollziehen, wobei in einer ersten Nadelmaschine zunächst eine Vorvernadelung des Faserflors mit einer Einstichdichte zwischen 35 und 150 Einstichen/cm², insbesondere 76 Einstichen/cm², durchgeführt wird, danach in einer zweiten Nadelmaschine eine Rückvernadelung mit einer Einstichdichte zwischen 50 und 300 Einstichen/cm², insbesondere 110 Einstichen/cm², durchgeführt wird, und abschließend in einer dritten oder Finish-Nadelmaschine mit einer Einstichdichte zwischen 500 und 1000 Einstichen/cm², insbesondere 860 - 900 Einstichen/cm², besonders bevorzugt 880 Einstichen/cm², ein Nadelvlies erzeugt wird. Im Rahmen dieses Vernadelungsprozesses passiert das aus einem Leger kommende kompakte Faserflor zunächst die erste Nadelmaschine, deren Nadeln in Nadelrichtung mit vertikaler Bewegung von oben nach unten eine Vorvernadelung durch das Flor stechen. In der nachfolgenden zweiten Nadelmaschine findet dann eine Rückvernadelung statt, so dass anschließend eine Durchdringung des Nadelvlieses von beiden Seiten des Nadelvlieses nach dem Durchlaufen der ersten und zweiten Nadelmaschine durchgeführt worden ist. Insofern bedeuten die Begriffe Vorvernadelung und Rückvernadelung im hier benutzten Sinne auch, dass die Vernadelung einerseits von der Vorderseite (Vorvernadelung) und andererseits von der dazu rückseitigen Seite (Rückvernadelung) des Faserflors oder dann schon Faservlieses durchgeführt wird. Durch diese Maßnahme bildet sich eine homogene und gleichmäßige Faserverschlingung aus, die zu einer ausgezeichneten Oberflächenkonstanz und einer hohen Abriebfestigkeit führen. In der danach abschließend von dem Faservlies durchlaufenen dritten Nadelmaschine oder Finish-Nadelmaschine wird dann eine abschließende Vernadelung durchgeführt, die vorzugsweise wieder als Vorvernadelung von der Vorderseite her durchgeführt wird. Diese kann aber gewünschtenfalls auch als Rückvernadelung von der Rückseite durchgeführt werden, je nachdem, wie die Faservliesführung in den drei Nadelmaschinen ist und welche der beiden Seiten später die dekorative Oberfläche mit dem gewünschten positiven Oberflächenbild darstellen soll. Bei allen drei Nadelvorgängen, d. h. in allen drei Nadelmaschinen wird der Vliesstoff von den Nadeln jeweils vollständig durchstoßen.

Das Scheren des erzeugten Nadelvlieses auf seiner Polseite bewirkt, dass die Faserpolenden einerseits auf eine gleichmäßige Länge gebracht, andererseits bei diesem Scher- oder Schneidvorgang aber auch gleichzeitig in vertikaler Richtung aufgerichtet werden.

Das Aufbringen des eine adhäsive Bindung bewirkenden wässrigen Bindemittels bewirkt die adhäsive Verfestigung und Fasereinbindung der Fasern, wodurch hohe Abriebfestigkeiten und Fasereinbindekräfte erzielt werden können. Dies schließt hohe Qualitäten in den Gebrauchsechtheiten ein.

Von besonderem Vorteil ist es gemäß Ausgestaltung der Erfindung für die Herstellung eines Kraftfahrzeuginnenraumverkleidungsmaterials, wenn das Fasergemisch aus Polyamid-Fasern und Polyester-Fasern gebildet wird, die eine Feinheit von 4,4 bis 17 dtex, insbesondere von 5,6 bis 7 dtex, aufweisen. Wenn Polyester-Fasern und Polyamid-Fasern einer solchen Feinheit verwendet werden, führt dies bei der Vernadelung bereits zu solchen Festigkeiten und Verfestigungen des Faservlieses bzw. Nadelvlieses, dass auf die Zumischung weiterer oder zusätzlicher Bindefasern oder Bindefäden in das Fasergemisch verzichtet werden kann.

Von besonderem Vorteil ist es dann hierbei, wenn das Fasergemisch mit gekräuselten Polyamidfasern gebildet wird, die eine Kräuselung von 2,5 bis 4,5 Bögen/cm, insbesondere 3,5 Bögen/cm, und eine Feinheit von 4,4 bis 7 dtex, insbesondere von 5,6 bis 7 dtex, aufweisen, was die Erfindung in Ausgestaltung vorsieht. Die Verwendung von derart gekräuselten und eine derartige Feinheit aufweisenden Polyamid-Fasern in dem Fasergemisch des Faserflors oder des Nadelvlieses führt zum einen dazu, dass mit der Vernadelung bereits eine ausreichende Verfestigung des Vlieses erreicht werden kann. Insbesondere führt die Verwendung derartiger Polyamid-Fasern aber dazu, dass sich diese gekräuselten und feinen Polyamid-Fasern nach Durchlaufen eines thermoplastischen Formgebungsprozesses schnell wieder in vertikaler Richtung aus- und aufrichten, wodurch die gewünschte besonders gute Erscheinung des Oberflächenbildes des Nadelvlieses erreicht wird.

Um bei dem Schervorgang auf besonders vorteilhafte Weise ein Aufrichten der Polfasern bzw. der Faserpolenden zu erzielen, ist es von Vorteil, das Scheren mittels rotierender Scherzylinder einer Schermaschine durchzuführen. Die Erfindung zeichnet sich daher in Weiterbildung dadurch aus, dass die Polseite des Nadelvlieses mittels eines oder mehrerer rotierender Messerzylinder (S) einer Schermaschine geschoren wird.

Hierbei ist es dann im Hinblick auf die gewünschte verbesserte Erscheinungsform des Oberflächenbildes des Kraftfahrzeuginnenraumverkleidungsmaterials bzw. des daraus hergestellten Fahrzeuginnenraumverkleidungsbauteils von Vorteil, wenn die Fasern der Polseite des Nadelvlieses auf eine Länge oder Polhöhe von 1,5 bis 3 mm mittels eines oder mehrerer rotierender Messerzylinder (S) einer Schermaschine geschoren oder geschnitten werden, wodurch sich die Erfindung ebenfalls auszeichnet. Hierdurch wird erreicht, dass ein definierter Teil des vertikal stehenden Faserpoles mittels der rotierenden Messer auf eine definierte Höhe geschoren/geschnitten und durch die Rotationsbewegung der Messer der rotierenden Zylinder homogenisiert wird. Bei dem Schervorgang werden die Faserpolenden erfasst und die Enden der dann geschnittenen Fasern in vertikaler Richtung aufgerichtet.

Ein besonders vorteilhaft zu verwendendes wässriges Bindemittel umfasst Polymere aus Styrol-Butadien-Kautschuk, Styrolacrylat, Acrylat oder Mischungen aus carboxylierten Styrolacrylaten. Die Erfindung zeichnet sich daher in weiterer Ausgestaltung dadurch aus, dass die adhäsive Bindung mittels eines wässrigen Bindemittels oder einer wässrigen Dispersion erzeugt wird, das/die Polymere aus der Gruppe Styrol-Butadien-Kautschuk, Styrolacrylat, Acrylat oder Mischungen carboxylierter Styrolacrylate umfasst.

Für den Auftrag des wässrigen Bindemittels ist es von Vorteil, das geschorene Nadelvlies auf der Rückseite zum ausgestochenen Pol mit einer wässrigen Dispersion im Schaum-Minimal-Auftrag (beispielsweise in einem Kiss-Roll-Verfahren) aufzutragen und anschließend unter gleichzeitiger Bildung des die adhäsive Bindung bewirkenden Films zu trocknen. Die Erfindung sieht daher in Weiterbildung auch vor, dass das wässrige Bindemittel, insbesondere die wässrige Dispersion, in einem minimalen Schaumauftrag auf die der geschorenen Polseite abgewandte Seite des geschorenen Nadelvlieses aufgetragen und in einem nachfolgenden Verfahrensschritt unter Ausbildung eines die adhäsive Bindung bewirkenden Bindemittelfilms getrocknet wird.

Die Herstellung des Kraftfahrzeuginnenraumverkleidungsmaterials kann dann zusätzlich auch den Schritt vorsehen, dass das hergestellte Nadelvlies thermoplastisch verformt wird.

Für besondere Anwendungsfälle, aber gegebenenfalls auch schon in Vorbereitung auf die Durchführung des gewünschten thermoplastischen Formgebungsprozesses kann es zweckmäßig sein, das Nadelvlies auf ein Trägermaterial aufzubringen. Die Erfindung zeichnet sich daher auch dadurch aus, dass das Nadelvlies auf ein Trägermaterial aufgebracht wird.

Schließlich zeichnet sich die Erfindung dadurch aus, dass das Nadelvlies nach der Trocknung des wässrigen Bindemittels oder nach seinem Aufbringen auf ein Trägermaterial thermoplastisch verformt wird, was sich als besonders günstiger Zeitpunkt herausgestellt hat.

Die gleichen Vorteile wie vorstehend erwähnt weist auch ein Kraftfahrzeuginnenraumverkleidungsbauteil auf, das durch thermoplastische Verformung eines nach einem der Ansprüche 1 bis 9 mittels eines thermischen Formgebungsprozesses, vorzugsweise im Temperaturbereich von 150°C bis 250°C, hergestellten Kraftfahrzeuginnenraumverkleidungsmaterials hergestellt ist. Üblicherweise werden derartige thermische Formgebungsprozesse zur Durchführung einer thermoplastischen, gegebenenfalls auch duroplastischen, Verformung des Nadelvliesmaterials im Temperaturbereich um 200°C durchgeführt.

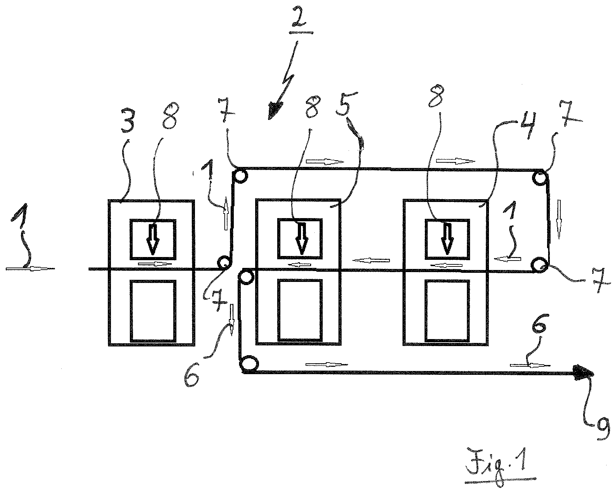

Die Erfindung ist nachstehend anhand eines Ausführungsbeispiels näher erläutert. Hierbei zeigt die
- Fig. 1: in schematischer Darstellung den Durchlauf eines Faserflores durch drei hinsichtlich des Durchlaufes in Reihe geschaltete Nadelmaschinen.

Die Herstellung des erfindungsgemäßen Kraftfahrzeuginnenraumverkleidungsmaterials sowie des Kraftfahrzeuginnenraumverkleidungsbauteils erfolgt im Wesentlichen mit den gleichen Anlagen und in den gleichen Verfahrensprozessschritten, wie es bei derartigen Nadelvliesmaterialien bisher üblich ist. Es wird eine möglichst homogene Mischung eines Fasergemisches hergestellt, das aus 25 bis 35 Gew.-%, vorzugsweise 30 Gew.-%, Polyamid(PA)-Fasern und 65 bis 75 Gew.-%, vorzugsweise 70 Gew.-%, an Polyester(PES)-Fasern besteht. Im Ausführungsbeispiel weisen die Polyamid-Fasern und die Polyester-Fasern eine Feinheit von 5,6 bis 7 dtex auf, wobei die Polyamid-Fasern zudem mit einer Kräuselung von 3,5 Bögen/cm gekräuselt sind. Aus dieser Fasermischung wird in üblicher Weise ein Faserflor hergestellt, d. h. gelegt. Aus dem Leger kommend wird das in der Fig. 1 lediglich als Pfeil dargestellte und mit 1 bezeichnete kompakte Faserflor einer insgesamt mit zwei bezeichneten Vernadelungseinrichtung 2 zugeführt. Das Faserflor 1 durchläuft diese Vernadelungseinrichtung 2 dann in Richtung der Pfeile 1, wobei es zunächst eine erste Nadelmaschine 3, danach eine zweite Nadelmaschine 4 und abschließend eine dritte Nadelmaschine 5 durchläuft. Nach dem Verlassen der dritten Nadelmaschine 5 liegt bereits ein genadeltes Nadelvlies vor, was in der Fig. 1 nun durch Bezeichnung des Pfeiles mit dem Bezugszeichen 6 zum Ausdruck kommt. Das Faserflor 1 wird zunächst der ersten Nadelmaschine 3 zugeführt, in welcher es von oben im Sinne einer Vorvernadelung von Nadeln durchstochen wird, die in vertikaler Bewegungsrichtung von oben nach unten geführt werden. In dieser ersten Nadelmaschine 3 wird das Faserflor 1 im Ausführungsbeispiel mit einer Einstichdichte von 76 Einstichen/cm² durchstoßen. Nach dem Verlassen der ersten Nadelmaschine 3 wird das Faserflor 1 über mehrere Umlenkrollen 7 geführt, so dass das Faserflor 1 dann mit der der Nadelseite 8 der zweiten Nadelmaschine 4 zugewandten Oberseite zugeführt wird, die in der ersten Nadelmaschine 3, die der dortigen Nadelseite 8 abgewandte Oberflächenseite des Faserflors 1 darstellt. In der zweiten Nadelmaschine 4 findet somit eine Rückvernadelung von der Rückseite des Faserflors 1 her statt, die im Ausführungsbeispiel mit einer Einstichdichte von 110 Einstichen/cm² durchgeführt wird. In allen drei Nadelmaschinen 3 bis 5 wird das Faserflor 1 jeweils vollständig von den Nadeln durchstochen, so dass nach dem Verlassen der zweiten Nadelmaschine 4 im Ergebnis bereits eine Durchdringung des Faserflores 1 und des an dieser Stelle dann schon vorliegenden ersten Nadelvlieses vorliegt, wodurch sich eine homogene und gleichmäßige Faserverschlingung ausbildet, die Basis für das konstant gleichmäßige Oberflächenbild des fertig genadelten Nadelvlieses 6 und die zu erreichende Abriebfestigkeit ist. Nach Verlassen der zweiten Nadelmaschine 4 durchläuft das Faserflor 1 bzw. das bereits gebildete erste Nadelvlies abschließend die dritte Nadelmaschine oder Finish-Nadelmaschine 5, wobei das Faserflor 1 oder das erste Nadelvlies mit derselben Ausrichtung wie in der zweiten Nadelmaschine 4 auch in der dritten Nadelmaschine 5 genadelt wird. D. h., in der dritten Nadelmaschine 5 ist dieselbe Oberflächenseite des Faserflors 1 der dortigen Nadelseite 8 zugewandt wie in der zweiten Nadelmaschine 4. Wie in der ersten Nadelmaschine 3 und der zweiten Nadelmaschine 4 wird das Faserflor 1 auch in der dritten Nadelmaschine 5 mit vertikal ausgerichteten Nadeln in vertikaler Bewegung von oben nach unten durchstochen, wobei hier im Ausführungsbeispiel eine Einstichdichte von 880 Einstichen/cm² erzeugt wird. In dieser Finish-Nadelmaschine 5 wird die vertikale Ausrichtung der Fasern manifestiert und verstärkt sowie ein dichter und stabiler Pol erzeugt. Damit ist aus dem Faserflor 1 durch Vernadelung ein Nadelvlies 6 erzeugt worden. Dieses Nadelvlies 6 wird nun zur Herstellung des Kraftfahrzeuginnenraumverkleidungsmaterials in nachfolgenden Stufen und Verfahrensschritten zunächst einer Schereinrichtung und danach einer Bindemittelauftragseinrichtung zugeführt, die sich in Pfeilrichtung 9 an die Vernadelungseinrichtung 2 anschließen. In der Schereinrichtung wird das Nadelvlies 6 auf seiner Polseite geschoren. Im Ausführungsbeispiel geschieht dies mittels einer Schermaschine, die mindestens einen rotierenden mit mindestens einem Schermesser besetzten Zylinder (Messerzylinder) aufweist, womit die Fasern auf der Polseite des Nadelvlieses 6 auf eine Länge oder Polhöhe von 1,5 bis 3 mm, im Ausführungsbeispiel auf eine Polhöhe von 2 mm, geschoren oder geschnitten werden. Hierbei wird der abzuschneidende Bereich des vertikal stehenden Faserpoles durch das/die rotierende(n) Messer auf die gewünschte, hier 2 mm betragende Polhöhe, geschnitten. Hierbei wird der Faserpol durch das oder die rotierenden Messer homogenisiert, d. h. vergleichmäßigt, wobei gleichzeitig bei dem Scher- oder Schneidvorgang die Faserpolenden erfasst und die stehenbleibenden Enden der geschnittenen Fasern in vertikaler Richtung aufgestellt werden.

Nach dem Scheren wird das geschorene Nadelvlies der Bindemittelauftragseinrichtung zugeführt, mittels welcher das geschorene Nadelvlies auf seiner Rückseite, d.h. der dem gestochenen Pol gegenüberliegenden Seite, mit einer wässrigen Dispersion versehen wird. Bei der wässrigen Dispersion handelt es sich um ein wässriges Bindemittel, das Polymere aus der Gruppe Styrol-Butadien-Kautschuk, Styrolacrylat, Acrylat oder Mischungen carboxylierter Styrolacrylate umfasst. Dieses wässrige Bindemittel oder diese wässrige Dispersion wird in einem minimalen Schaumauftrag auf die der geschorenen Polseite abgewandte Seite des geschorenen Nadelvlieses aufgetragen und in einem nachfolgenden Verfahrensschritt unter Ausbildung eines die adhäsive Bindung bewirkenden Bindemittelfilms getrocknet. Diese adhäsive Verfestigung durch adhäsive Bindung ist für die Fasereinbindung von großer Bedeutung, da dadurch hohe Abriebfestigkeiten und Fasereinbindekräfte erzielt werden können, die hohe Qualitäten in den Gebrauchsechtheiten einschließen.

Das Fasergemisch in Form des daraus gebildeten Faserflores 1 aufeinanderfolgenden Prozessschritten unterworfen, in welchen es durch Nadeln mechanisch verfestigt wird. Zumindest einer dieser Prozessschritte ist derart ausgebildet, dass sich beim Nadeln ein Polvlies bildet. Zusätzlich zu der mechanischen Verfestigung wird das Fasergemisch einer adhäsiven Verfestigung, d.h. einer Klebewirkung, unterworfen. Hierzu wird dem Fasergemisch im Rahmen des Produktionsprozesses zum fertigen Nadelvlies ein entsprechend geeignetes Bindemittel zugemischt. Die das Nadeln umfassenden Prozessschritte umfassen auch eine Finishvernadelung oder einen Prozessschritt, bei welchem das Fasergemisch mit einer Stichdichte von 500 bis 1000 Stiche/cm², vorzugsweise 860 bis 900 Stiche/cm², insbesondere 880 Stiche/cm², genadelt wird. Nach dem letzten Nadel-Prozessschritt wird die insbesondere als Polvlies ausgebildete Oberfläche des gebildeten Nadelvlieses mit einem Scherschnitt auf eine gleichmäßige Faserlänge, insbesondere eine Polhöhe zwischen 1,5 mm bis 3 mm nach dem Scheren, geschnitten und reduziert.

Danach wird das derart hergestellte Nadelvlies einem thermischen Formgebungsprozess oder thermischen Formgebungsverfahren, insbesondere einer üblichen thermoplastischen Verformung im Temperaturbereich zwischen 150°C und 250°C, vorzugsweise um die 200°C, unterworfen. Hierbei kann zudem vorgesehen sein, dass das Vliesmaterial vor dem Durchlaufen des thermischen Formgebungsprozesses in üblicher und bekannter Weise auf ein Trägermaterial aufgebracht wird, so dass das Nadelvlies zusammen mit dem Trägermaterial verformt wird. Nach dem Durchlaufen dieses thermischen Formgebungsprozesses stellt das erhaltene Nadelvlies ein Kraftfahrzeuginnenraumverkleidungsmaterial dar, das gegebenenfalls auch bereits schon ein Kraftfahrzeuginnenraumverkleidungsbauteil darstellen kann, sofern es nicht noch einer weiteren oder mehreren nachfolgenden Bearbeitungsstufen unterworfen wird und gegebenenfalls bereits in dem gewünschten Fertigungsmaß herstellt ist.

Bei der Herstellung des Nadelvlieses bzw. des erfindungsgemäßen Kraftfahrzeuginnenraumverkleidungsmaterials finden zweckmäßigerweise Polyamid-Fasern Verwendung, die eine Feinheit von 5,6 bis 7 dtex, insbesondere 6,7 dtex aufweisen.

## Patentansprüche

1. Verfahren zur Herstellung eines Kraftfahrzeuginnenraumverkleidungsmaterials, das ein Nadelvlies umfasst oder zumindest im Wesentlichen aus einem Nadelvlies besteht, welches ein Fasergemisch aus 25 - 35 Gew.-% Polyamid (PA)-Fasern und 65 - 75 Gew.-% Polyester(PES)-Fasern, vorzugsweise ohne weitere Bindefasern, aufweist, sowie mechanisch durch Nadeln und mittels einer adhäsiven Bindung verfestigt ist,
**dadurch gekennzeichnet,**
**dass** ein aus dem Fasergemisch gelegter Faserflor (1) nacheinander drei Nadelmaschinen (3, 4, 5) durchläuft, die jeweils eine Nadelbewegung in vertikaler Richtung aufweisen, wobei in einer ersten Nadelmaschine (3) zunächst eine Vorvernadelung des Faserflors (1) mit einer Einstichdichte zwischen 35 und 150 Einstichen/cm2, insbesondere 76 Einstichen/cm2, durchgeführt wird, danach in einer zweiten Nadelmaschine (4) eine Rückvernadelung mit einer Einstichdichte zwischen 50 und 300 Einstichen/cm2, insbesondere 110 Einstichen/cm2, durchgeführt wird, und abschließend in einer dritten oder Finish-Nadelmaschine (5) mit einer Einstichdichte zwischen 500 und 1000 Einstichen/cm2, insbesondere 860 - 900 Einstichen/cm2, besonders bevorzugt 880 Einstichen/cm2, ein Nadelvlies (6) erzeugt wird, und
**dass** das derart erzeugte Nadelvlies (6) auf seiner Polseite geschoren und das geschorene Nadelvlies auf seiner der geschorenen Polseite abgewandten Seite mit einem eine adhäsive Bindung bewirkenden wässrigen Bindemittel versehen wird.

2. Verfahren nach Anspruch 1, **dadurch gekennzeichnet, dass** das Fasergemisch aus Polyamid-Fasern und Polyester-Fasern gebildet wird, die eine Feinheit von 4,4 - 17 dtex, insbesondere von 5,6 - 7 dtex, aufweisen.

3. Verfahren nach Anspruch 1 oder 2, **dadurch gekennzeichnet, dass** das Fasergemisch mit gekräuselten Polyamid-Fasern gebildet wird, die eine Kräuselung von 2,5 - 4, 5 Bögen/cm, insbesondere 3,5 Bögen/cm, und eine Feinheit von 4,4 - 17 dtex, insbesondere von 5,6 - 7 dtex, aufweisen.

4. Verfahren nach einem der vorhergehenden Ansprüche, **dadurch gekennzeichnet, dass** die Polseite des Nadelvlieses (6) mittels eines oder mehrerer rotierender Messerzylinder (S) einer Schereinrichtung geschoren wird.

5. Verfahren nach einem der vorhergehenden Ansprüche, **dadurch gekennzeichnet, dass** die Fasern der Polseite des Nadelvlieses (6) auf eine Länge oder Polhöhe von 1,5 mm - 3 mm mittels eines oder mehrerer rotierender Messerzylinder (S) einer Schereinrichtung geschoren oder geschnitten werden.

6. Verfahren nach einem der vorhergehenden Ansprüche, **dadurch gekennzeichnet, dass** die adhäsive Bindung mittels eines wässrigen Bindemittels oder einer wässrigen Dispersion erzeugt wird, das/die Polymere aus der Gruppe Styrol-Butadien-Kautschuk, Styrolacrylat, Acrylat oder Mischungen carboxylierter Styrolacrylate umfasst.

7. Verfahren nach einem der vorhergehenden Ansprüche, **dadurch gekennzeichnet, dass** das wässrige Bindemittel, insbesondere die wässrige Dispersion, in einem minimalen Schaumauftrag auf die der geschorenen Polseite abgewandte Seite des geschorenen Nadelvlieses aufgetragen und in einem nachfolgenden Verfahrensschritt unter Ausbildung eines die adhäsive Bindung bewirkenden Bindemittelfilms getrocknet wird.

8. Verfahren nach einem der vorhergehenden Ansprüche, **dadurch gekennzeichnet, dass** das Nadelvlies auf ein Trägermaterial aufgebracht wird.

9. Verfahren nach einem der vorhergehenden Ansprüche, **dadurch gekennzeichnet, dass** das Nadelvlies nach der Trocknung des wässrigen Bindemittels oder nach seinem Aufbringen auf ein Trägermaterial thermoplastisch verformt wird.

## Claims

1. Process for producing a motor vehicle interior trim material comprising or at least essentially consisting of a needlefelt which includes a fibre blend comprising 25-35 wt% of polyamide (PA) fibres and 65-75 wt% polyester (PES) fibres, preferably without other, bonding fibres, and is consolidated mechanically by needling and via adhesive bonding,
**characterized in that**
a batt (1) laid from the fibre blend passes in succession through three needling machines (3, 4, 5) which each have or execute a needling motion in the vertical direction, wherein first in a first needling machine (3) a fore- or pre-needling of the batt (1) is effected at a stitch density between 35 and 150 stitches/cm², in particular 76 stitches/cm², thereafter a backneedling is effected in a second needling machine (4) at a stitch density between 50 and 300 stitches/cm², in particular 110 stitches/cm², and finally a needlefelt (6) is produced in a third or finishing type needling machine (5) at a stitch density between 500 and 1000 stitches/cm², in particular 860-900 stitches/cm², more preferably 880 stitches/cm², and
**in that** the needlefelt (6) thus produced is shorn on its pile side and an aqueous binder to the shorn needlefelt is provided on the side remote from the shorn pile side to bring about adhesive bonding.

2. Process according to Claim 1, **characterized in that** the fibre blend is formed from polyamide fibres and polyester fibres having a fineness of 4.4-17 dtex, in particular of 5.6-7 dtex.

3. Process according to Claim 1 or 2, **characterized in that** the fibre blend is formed with crimped polyamide fibres having a crimp of 2.5-4.5 arcs/cm, in particular 3.5 arcs/cm, and a fineness of 4.4-17 dtex, in particular of 5.6-7 dtex.

4. Process according to any preceding claim, **characterized in that** the pile side of the needlefelt (6) is shorn using one or more rotating bladed cylinders (S) of a shearing apparatus.

5. Process according to any preceding claim, **characterized in that** the fibres on the pile side of the needlefelt (6) are shorn or cut to a length or pile height of 1.5 mm - 3 mm using one or more rotating bladed cylinders (S) of a shearing apparatus.

6. Process according to any preceding claim, **characterized in that** the adhesive bonding is produced using an aqueous binder or an aqueous dispersion in either case comprising polymers from the group styrene-butadiene rubber, styrene-acrylate, acrylate or mixtures of carboxylated styrene-acrylates.

7. Process according to any preceding claim, **characterized in that** the aqueous binder, in particular the aqueous dispersion, is applied onto that side of the shorn needlefelt which is remote from the shorn pile side in a minimum foam add-on process and in a subsequent step is dried to form a binder film bringing about the adhesive bonding.

8. Process according to any preceding claim, **characterized in that** the needlefelt is applied onto a base material.

9. Process according to any preceding claim, **characterized in that** the needlefelt is thermoformed after the step of drying the aqueous binder or after the step of applying the needlefelt onto a base material.

## Revendications

1. Procédé de fabrication d'un matériau pour garniture d'habitacle de véhicule à moteur, qui comprend une nappe aiguilletée ou au moins est pour l'essentiel constitué d'une nappe aiguilletée, qui présente un mélange de fibres constitué de 25 à 35 % en poids de fibres de polyamide (PA) et de 65 à 75 % en poids de fibres de polyester (PES), de préférence sans fibres de liaison supplémentaires, et de même est consolidé mécaniquement par aiguilletage ou à l'aide d'une liaison par adhérence,
**caractérisé en ce que**
un voile de carde (1), déposé à partir d'un mélange de fibres, parcourt successivement trois machines d'aiguilletage (3, 4, 5), qui chacune exerce un mouvement d'aiguilletage dans la direction verticale, tout d'abord un pré-aiguilletage du voile de carde (1) est, dans une première machine d'aiguilletage (3), réalisé avec une densité de piqûres comprise entre 35 et 150 piqûres/cm², en particulier de 76 piqûres/cm², puis on procède dans une deuxième machine d'aiguilletage (4) à un ré-aiguilletage avec une densité de piqûres comprise entre 50 et 300 piqûres/cm², en particulier de 110 piqûres/cm², puis, pour terminer, on produit dans une troisième machine d'aiguilletage (5), ou machine d'aiguilletage de finition, une nappe aiguilletée (6) présentant une densité de piqûres comprise entre 500 et 1000 piqûres/cm², en particulier de 860 à 900 piqûres/cm², d'une manière particulièrement préférée de 880 piqûres/cm², et
que la nappe aiguilletée (6) ainsi produite subit sur son côté poil un rasage, la nappe aiguilletée rasée étant, sur sa face opposée à son côté poil rasé, pourvue d'un liant aqueux réalisant une liaison par adhérence.

2. Procédé selon la revendication 1, **caractérisé en ce que** le mélange de fibres est formé à partir de fibres de polyamide et de fibres de polyester qui présentent une finesse de 4,4 à 17 dtex, en particulier de 5,6 à 7 dtex.

3. Procédé selon la revendication 1 ou 2, **caractérisé en ce que** le mélange de fibres est formé avec des fibres de polyamide frisées, qui présentent une frisure de 2,5 à 4,5 ondulations/cm, en particulier de 3,5 ondulations/cm, et une finesse de 4,4 à 17 dtex, en particulier de 5,6 à 7 dtex.

4. Procédé selon l'une des revendications précédentes, **caractérisé en ce que** le côté poil de la nappe aiguilletée (6) est rasé à l'aide d'un ou plusieurs cylindres rotatifs à lames (S) d'un dispositif de rasage.

5. Procédé selon l'une des revendications précédentes, **caractérisé en ce que** les fibres du côté poil de la nappe aiguilletée (6) sont rasées ou coupées à une longueur ou à une hauteur de poil de 1,5 mm à 3 mm à l'aide d'un ou plusieurs cylindres rotatifs à lames (S) d'un dispositif de rasage.

6. Procédé selon l'une des revendications précédentes, **caractérisé en ce que** la liaison par adhérence est produite à l'aide d'un liant aqueux ou d'une dispersion aqueuse qui comprend des polymères du groupe consistant en le caoutchouc styrène-butadiène, le styrène-acrylate, l'acrylate ou des mélanges de styrène-acrylate carboxylés.

7. Procédé selon l'une des revendications précédentes, **caractérisé en ce que** le liant aqueux, en particulier la dispersion aqueuse, est appliqué, selon une application minimale de mousse, sur la face de la nappe aiguilletée rasée opposée au côté poil rasé, et, au cours d'une étape ultérieure du procédé, est séché avec formation d'un film de liant ayant un effet de liaison par adhérence.

8. Procédé selon l'une des revendications précédentes, **caractérisé en ce que** la nappe aiguilletée est appliquée sur un matériau support.

9. Procédé selon l'une des revendications précédentes, **caractérisé en ce que** la nappe aiguilletée subit, après le séchage du liant aqueux ou après son application sur un matériau support, une déformation thermoplastique.
